# EUROPEAN PATENT SPECIFICATION

(11) **EP 1 837 384 B1**
(45) Date of publication and mention of the grant of the patent: **17.03.2010**
(21) Application number: 06704684.7
(22) Date of filing: 16.01.2006
(51) Int. Cl.: C09J 7/02

(54) **SURFACE PROTECTIVE SHEET**
OBERFLÄCHENSCHUTZFOLIE
FEUILLE DE PROTECTION DE SURFACE

(30) Priority: 14.01.2005 WO PCT/JP2005/000389
(43) Date of publication of application: 26.09.2007
(73) Proprietor: Nichiban Company Limited, Bunkyo-ku, Tokyo 112-8663 (JP)
(72) Inventor: ICHIMURA, Syuji c/o Nichiban Company Limited, Tokyo 112-8663 (JP); ENDO, Mikihiro c/c Nichiban Company Limited, Tokyo 112-8663 (JP)
(74) Representative: Sieckmann, Dirk Christoph
(86) International application number: PCT/JP2006/300460
(87) International publication number: WO 2006/075745

(56) References cited:
- EP-A- 1 743 928
- EP-A1- 0 955 346
- DE-A1- 2 329 035
- JP-A- 06 279 742
- JP-A- 07 188 471
- JP-A- 07 233 354
- JP-A- 08 012 949
- JP-A- 09 020 881
- JP-A- 09 176 581
- JP-A- 10 298 514
- JP-A- 2000 104 030
- JP-A- 2000 204 330

## Description

### TECHNICAL FIELD

The present invention relates to a surface protective sheet for protecting a product metal surface, glass surface, plastic surface, rubber surface, coated surface, etc.

### BACKGROUND ART

Known examples of conventional methods for protecting the topcoat coated surface of the surface of an automobile body on which painting was completed consisted of laminating a plastic film or sheet having a pressure-sensitive adhesive layer onto the adhered article.

In general, numerous polyisobutylene pressure-sensitive adhesives have been used as the pressure-sensitive adhesive used in these films or sheets for reasons such as their superior adhesion properties and stability (Japanese Unexamined Patent Publication No. H9-221649, EP-A-1 743 928, DE 23 29 035 A1). However, although polyisobutylene pressure-sensitive adhesives have superior adhesion properties, due to their small thermoplasticity and inferior extrusion suitability, the production methods of these sheets have been limited to solution coating (spread coating). On the other hand, although protective sheets with a pressure-sensitive adhesive using a thermoplastic polymer such as a styrene polymer are available commercially from the viewpoint of processing ease, protective sheets using these styrene polymers have the disadvantage of exhibiting large increases in adhesive strength due to heating or with the passage of time, thereby resulting in inferior ease of peeling work (Japanese Examined Patent Publication No. H5-74627).

### DISCLOSURE OF THE INVENTION

An object of the present invention is to provide a surface protective sheet that demonstrates little increases in adhesive strength after heating or the passage of time, has satisfactory adhesion properties to and peel properties from an adherend, and can be produced by extrusion coating (hot melt coating).
(1) The present invention relates to a surface protective sheet having a pressure-sensitive adhesive layer on at least one side of a substrate, characterized in that the pressure-sensitive adhesive comprises 100 parts by weight of a thermoplastic elastomer composed of a styrene-isobutylene block copolymer and a styrene block copolymer or a styrene random copolymer other than the styrene-isobutylene block copolymer, and 0 to 300 parts by weight of a softening agent and 0 to less than 20 parts by weight of a tackifying resin, based on 100 parts by weight the thermoplastic elastomer.
(2) The present invention relates to a surface protective sheet according to (1), characterized in that the styrene-isobutylene block copolymer and the styrene copolymer other than the styrene-isobutylene block copolymer are comprised at a weight ratio of 70:30 to 50:50.
(3) The present invention relates to a surface protective sheet according to any of (1) to (2), characterized in that the melt flow rate of the pressure-sensitive adhesive is 0.5 to 300 g/10 min at 190°C and 2.16 kg.
(4) The present invention relates to a surface protective sheet according to any of (1) to (3), characterized in that the tackifying resin is composed of a hydrogenated rosin ester resin.
(5) The present invention relates to a surface protective sheet according to any of (1) to (4) wherein the softening agent is at least one selected from the group consisting of oil, paraffin wax, low molecular weight polybutene, low molecular weight polyisoprene, low molecular weight polyisobutylene and low molecular weight poly-α-olefin.
(6) The present invention relates to a surface protective sheet according to any of (1) to (5), characterized in that at least one selected from the group consisting of an antioxidant, ultraviolet absorber, ultraviolet stabilizer (HALS), antistatic agent and lubricant is comprised in the pressure-sensitive adhesive.
(7) The present invention relates to a surface protective sheet according to any of (1) to (6) wherein the ultraviolet transmission rate of the substrate is 1% or less.

### EFFECT OF THE INVENTION

A surface protective sheet provided with both the processing suitability of a styrene pressure-sensitive adhesive and the adhesion properties of an isobutylene pressure-sensitive adhesive can be obtained by using a styrene-polyisobutylene block copolymer(SIBS) as a base polymer of the pressure-sensitive adhesive described in the present invention. Namely, a surface protective sheet of the present invention has suitable adhesion properties from room temperature to low temperatures, has satisfactory adhesion properties to and peel properties from an adherend, exhibits little increases in adhesive strength after heating, is free of soiling and sticking traces on an adherend, and has superior weather resistance. Moreover, the production process of the surface protective sheet is simple, and can be produced by not only solution coating, but also extrusion coating (hot melt coating).

### BEST MODE FOR CARRYING OUT THE INVENTION

The "substrate" used in the present invention refers to a support of a surface protective sheet or a surface material, and may be in the form of a film or a sheet. Examples of resins used for the substrate include thermoplastic resins, either alone or a mixture thereof, such as polyolefin resin, nylon resin, polyester resin, etc. Examples of polyolefin resins used for the substrate include EVA, EEA, ionomers, polyethylene, polypropylene, ethylene-propylene copolymers, ethylene-α-olefin copolymers, etc. or mixtures thereof. In addition, non-thermoplastic films such as non-woven cloth, woven cloth, paper, metal-deposited film or metal can also be used for the substrate.

Letters, information, patterns, pictures, photographs or other drawings as well as single colors may be printed on one side of the substrate, and preferably on the opposite side of the side of the substrate having the pressure-sensitive adhesive, and further a continuous irregular surface pattern may be provided to remove air bubbles that tend to easily penetrate during affixing.

Titanium oxide or carbon black may be comprised in the substrate for the purpose of blocking ultraviolet rays. In addition, at least one of an antioxidant, ultraviolet absorber, ultraviolet stabilizer (HALS), antistatic agent or lubricant may be comprised as necessary in the substrate layer within a range that does not impair the object of the present invention, such as at 5 parts by weight or less (based on the aforementioned polyolefin resin, nylon resin, polyester resin or other thermoplastic resin used for the substrate).

The substrate film or sheet may be a single layer or a multilayer. A surface protective sheet can be produced by imparting a pressure-sensitive adhesive to these substrate films or sheets by spread coating or extrusion coating (hot melt coating). Accordingly, a film (surface protective film) produced by imparting a pressure-sensitive adhesive to a substrate film by spread coating or extrusion coating is included in a surface protective sheet of the present invention. Furthermore, a pressure-sensitive adhesive layer produced on the surface of a substrate film or sheet by imparting a pressure-sensitive adhesive by spread coating or extrusion coating may cover entirely the surface of substrate film or sheet, or the pressure-sensitive adhesive layer may be partially absent in the pattern of a lattice. In addition, the surface protective sheet (surface protective film) may be wound into the form of a roll before use. In addition, the surface protective sheet (surface protective film) may be subjected to release agent treatment with a release agent on the opposite side of the side having the pressure-sensitive adhesive layer of the substrate film or sheet as necessary.

A "surface protective sheet" used in the present invention refers to a sheet (pressure-sensitive adhesive sheet) or film (pressure-sensitive adhesive film) produced from the aforementioned substrate and pressure-sensitive adhesive layer, which is used for the purpose of protecting a metal surface, glass surface, plastic surface, rubber surface, coated surface, etc. of a product during transport or storage of the product or when processing the product.

In the case of co-extruding (hot melt coating) a pressure-sensitive adhesive and substrate to produce a surface protective sheet used in the present invention, the melt flow rate (MFR) of the pressure-sensitive adhesive and the melt flow rate of the substrate resin must be taken into consideration due to the effects of the each other resin. It is important that the difference between the melt flow rate of the pressure-sensitive adhesive and the melt flow rate of the substrate resin not be excessively large, and the melt flow rate of the substrate resin is preferably roughly equal to or less than the melt flow rate of the pressure-sensitive adhesive. However, in the case the melt flow rate of the substrate resin is larger than the melt flow rate of the pressure-sensitive adhesive, it is preferable that the difference is within 20 g/10 min, and preferably within 10 g/10 min, under conditions of 190°C and 2.16 kg.

The "thermoplastic elastomer" used in the present invention refers to a polymer material that exhibits rubber elasticity at normal temperatures, but can be plasticized and molded at high temperatures. The thermoplastic elastomer is preferably a styrene copolymer, olefin polymer, etc. and more preferably a styrene-isobutylene copolymer, styrene block copolymer, styrene random copolymer, olefin polymer, etc.

The "styrene-isobutylene block copolymer" used in the present invention refers to a block copolymer composed of styrene and isobutylene, wherein the styrene content is 3 to 40% by weight and preferably 5 to 35% by weight, while the remainder is entirely isobutylene. The melt flow rate of the styrene-isobutylene block copolymer is 0.01 to 150 g/10 min at 230°C and 2.16 kg. An example of a styrene-isobutylene block copolymer product is SIBSTER 102T manufactured by Kaneka Corp. having an MFR (230°C, 2.16 kg) of 0.6 g/10 min and so forth. However, the styrene-isobutylene block copolymer is not limited thereto provided it is a styrene-isobutylene block copolymer as defined above having the previously defined melt flow rate.

In consideration of extrusion suitability, the melt flow rate of the pressure-sensitive adhesive used in the present invention is preferably 5 to 300 g/10 min at 190°C and 2.16 kg, more preferably 0.5 to 200 g/10 min at 190°C and 2.16 kg, and particularly preferably 0.5 to 100 g/10 min at 190°C and 2.16 kg.

At least one of an olefin thermoplastic elastomer, butyl rubber or polyisobutylene can be comprised as necessary within a range that does not impair the object of the present invention such as 10 parts by weight or less (based on 100 parts by weight of styrene-isobutylene block copolymer or 100 parts by weight of a thermoplastic elastomer composed of a styrene-isobutylene block copolymer and a styrene block copolymer or styrene random copolymer other than a styrene-isobutylene block copolymer) in a pressure-sensitive adhesive comprising a softening agent and/or tackifying agent together with a styrene-isobutylene block copolymer, or a pressure-sensitive adhesive comprising a softening agent and/or a tackifying agent together with a thermoplastic elastomer composed of a styrene-isobutylene block copolymer and a styrene block copolymer or a styrene random copolymer other than a styrene-isobutylene block copolymer, used in the present invention.

An "olefin thermoplastic elastomer" used in the present invention refers to a thermoplastic elastomer in which the resin phase (hard segment), among the rubber phase (soft segment) and resin phase (hard segment) present in the thermoplastic elastomer, is composed of an olefin polymer such as polypropylene or polyethylene. Examples of commercially available products of olefin thermoplastic elastomers include, but are not limited to, Milastomer manufactured by Mitsui Chemicals Inc. and so forth, and any product can be used provided it comprises an olefin thermoplastic elastomer.

The "butyl rubber" used in the present invention refers to a synthetic rubber obtained by copolymerizing isoprene and isobutylene. Examples of commercially available butyl rubber products include, but are not limited to, Butyl 065 manufactured by JSR Corporation and so forth, and any product can be used provided it comprises a butyl rubber.

The "polyisobutylene" used in the present invention refers to a polymer of isobutylene. Examples of commercially available polyisobutylene products include, but are not limited to, Vixtanex manufactured by ExxonMobil Chemical and so forth, and any product can be used provided it comprises polyisobutylene.

The "tackifying resin" used in the present invention refers to a substance that has a function of giving tackiness to a thermoplastic elastomer by being blended into a thermoplastic elastomer. Although at least one of rosin resin, terpene resin, coumarone-indene resin, styrene resin, or aliphatic, alicyclic or aromatic petroleum resin, etc. can be used as a tackifying resin, a rosin resin or rosin resin composed of a modified rosin resin is preferable, and a rosin ester resin in which the rosin resin has been glycerin esterified or pentaerythritol esterified is more preferable. A hydrogenated rosin ester resin is particularly preferable because of its satisfactory heat resistance and weather resistance. Examples of commercially available products of tackifying resins include, but are not limited to, Pine Crystal KE100 (hydrogenated rosin ester resin), KE311, Ester Gum H or HP manufactured by Arakawa Chemical Industries, Ltd., Pentalin H, Forall 85 or Forall 105 manufactured by Rika Hercules and so forth, and any product can be used provided it has a function that gives tackiness to thermoplastic elastomers.

The content of the tackifying resin used in the present invention in the pressure-sensitive adhesive is 0 to less than 20 parts by weight, preferably 0 to 19 parts by weight, more preferably 0 to 18 parts by weight, and particularly preferably 0 to 15 parts by weight, based on 100 parts by weight of the styrene-isobutylene block copolymer or 100 parts by weight of the thermoplastic elastomer composed of styrene-isobutylene block copolymer and a styrene block copolymer or styrene random copolymer other than a styrene-isobutylene block copolymer. The content of the tackifying resin is as appropriate adjusted in consideration of an adherend.

The "softening agent" used in the present invention refers to a substance that has a function of adjusting the tackiness of a pressure-sensitive adhesive at low temperatures, and for example, at least one of oil, paraffin wax, low molecular weight polybutene, low molecular weight polyisoprene, low molecular weight polyisobutylene, low molecular weight poly-α-olefin, etc. can be used in the present invention as a softening agent.

Examples of oils used as a softening agent include paraffin oil, aromatic oil, naphthene oil, etc., and examples of commercially available products of oils used as a softening agent include Nisseki Hisol SAS manufactured by Nippon Petrochemicals and so forth.

Examples of paraffin waxes used as a softening agent include paraffin wax, polyethylene wax, etc., and examples of commercially available products of paraffin waxes used as a softening agent include 125° Paraffin manufactured by Nippon Petrochemicals Company, Limited and so forth.

The "low molecular weight polybutene" used as a softening agent refers to a liquid polybutene having an average molecular weight of about 200 to 5000, and examples of commercially available products of low molecular weight polybutenes used as softening agents include Idemitsu Polybutene manufactured by Idemitsu Kosan Co. Ltd., Nisseki Polybutene HV100 or HV300 manufactured by Nippon Petrochemicals and so forth.

The "low molecular weight polyisoprene" used as a softening agent refers to a liquid polyisoprene that is an isoprene polymer having a molecular weight of about several thousands to 60000, and examples of commercially available products of low molecular weight isoprenes used as a softening agent include Kuraprene LIR manufactured by Kuraray Co., LTD and so forth.

The "low molecular weight polyisobutylene" used as a softening agent refers to polyisobutylene having a viscosity-average molecular weight of about 5000 to 50000, and examples of commercially available products of low molecular weight polyisobutylenes used as a softening agent include Tetrax 3T manufactured by Nippon Petrochemicals and so forth.

The "low molecular weight poly-α-olefin" used as a softening agent refers to an alkene copolymer having a double bond at the terminal portion thereof, and examples of low molecular weight poly-α-olefins used as a softening agent include Idemitsu Poly-α-Olefin manufactured by Idemitsu Kosan, APAO manufactured by Ube Industries LTD and so forth.

Furthermore, there are no particular limitations on the products used as softening agents in the present invention provided they have a function that adjusts the tackiness of a pressure-sensitive adhesive at low temperatures.

The content of the softening agent used in the present invention in the pressure-sensitive adhesive is 0 to 300 parts by weight, preferably 0 to 200 parts by weight, more preferably 10 to 200 parts by weight and particularly preferably 30 to 200 parts by weight, based on 100 parts by weight of the styrene-isobutylene block copolymer or 100 parts by weight of the thermoplastic elastomer composed of styrene-isobutylene block copolymer and a styrene block copolymer or styrene random copolymer other than a styrene-isobutylene block copolymer. The content of the softening agent is as appropriate adjusted in consideration of low temperature characteristics and an adherend.

Examples of the styrene block copolymer used in the present invention (molecular weight: 10,000 to 1,000,000) include styrene-isoprene-styrene block copolymers (SIS), styrene-butadiene-styrene block copolymers (SBS), styrene-ethylenebutylene-styrene block copolymers (SEBS), styrene-ethylenepropylene-styrene block copolymers (SEPS), etc., and commercially available products of styrene block copolymers include, but are not limited to, Kraton G1657 manufactured by Kraton Polymer Japan and so forth, and any product can be used provided it is a block copolymer that comprises styrene.

Examples of the styrene random copolymer used in the present invention include styrene-butadiene rubber (SBR) and so forth, and examples of commercially available products of styrene random copolymers include, but are not limited to, Dynalon 1320P manufactured by JSR and so forth, and any product can be used provided it is a random copolymer that comprises styrene.

The weight ratio between the styrene-isobutylene block copolymer and styrene copolymer other than a styrene-isobutylene block copolymer used in the present invention is preferably such that styrene-isobutylene block copolymer: styrene copolymer other than a styrene-isobutylene block copolymer = 70:30 to 50:50, when the entire thermoplastic elastomer that combines the styrene-isobutylene block copolymer with styrene copolymer other than a styrene-isobutylene block copolymer is defined to be 100. Here, a styrene copolymer refers to a copolymer that comprises styrene, and may be a styrene random copolymer, styrene block copolymer or a mixture thereof.

The "antioxidant" used in the present invention refers to a substance that prevents changes in adhesive strength and decreases in cohesive strength of a pressure-sensitive adhesive caused by oxidative deterioration. Examples of antioxidants include phenol antioxidants, phosphite antioxidants, thioether antioxidants, etc., and at least one of these antioxidants can be comprised in the pressure-sensitive adhesive of the present invention as necessary within a range that does not impair the object of the present invention, such as at 5 parts by weight or less (based on 100 parts by weight of the styrene-isobutylene block copolymer or 100 parts by weight of the thermoplastic elastomer composed of a styrene-isobutylene block copolymer and a styrene block copolymer or styrene random copolymer other than a styrene-isobutylene block copolymer). Examples of commercially available products of antioxidants include, but are not limited to, Antage W500, W400, W300, BHT, SP, DBH, DHA or Crystal manufactured by Kawaguchi Chemical Industry Co., LTD, Sumilizer TPL or TPF manufactured by Sumitomo Chemical Co., Ltd and so forth, and any product can be used provided it has a function that prevents changes in adhesive strength and decreases in cohesive strength in a pressure-sensitive adhesive caused by oxidative deterioration.

The "ultraviolet absorber" used in the present invention refers to a substance that has a function of preventing photooxidative deterioration caused by absorption of ultraviolet rays. Examples of ultraviolet absorbers include benzotriazole ultraviolet absorbers, benzophenone ultraviolet absorbers, inorganic ultraviolet absorbers such as cerium oxide fine particles, etc., and at least one of these ultraviolet absorbers can be comprised in the pressure-sensitive adhesive of the present invention as necessary within a range that does not impair the object of the present invention, such as at 5 parts by weight or less (based on 100 parts by weight of the styrene-isobutylene block copolymer or 100 parts by weight of the thermoplastic elastomer composed of a styrene-isobutylene block copolymer and a styrene block copolymer or styrene random copolymer other than a styrene-isobutylene block copolymer). Examples of commercially available products of ultraviolet absorbers include, but are not limited to, Tinuvin P manufactured by Ciba Specialty Chemicals and so forth, and any product can be used provided it has a function that prevents photooxidative deterioration caused by absorption of ultraviolet rays.

Examples of the "ultraviolet stabilizer" used in the present invention include hindered amine (HALS) ultraviolet stabilizers, benzoate ultraviolet stabilizers, etc., and at least one of these ultraviolet stabilizers can be comprised in the pressure-sensitive adhesive of the present invention as necessary within a range that does not impair the object of the present invention, such as at 5 parts by weight or less (based on 100 parts by weight of the styrene-isobutylene block copolymer or 100 parts by weight of the thermoplastic elastomer composed of a styrene-isobutylene block copolymer and a styrene block copolymer or styrene random copolymer other than a styrene-isobutylene block copolymer).

The "antistatic agent" used in the present invention refers to a substance that has an action that prevents the generation of static electricity. Examples of antistatic agents include surfactants, conductive resins, conductive fillers, etc., and at least one of these antistatic agents can be comprised in the pressure-sensitive adhesive of the present invention as necessary within a range that does not impair the object of the present invention, such as at 5 parts by weight or less (based on 100 parts by weight of the styrene-isobutylene block copolymer or 100 parts by weight of the thermoplastic elastomer composed of a styrene-isobutylene block copolymer and a styrene block copolymer or styrene random copolymer other than a styrene-isobutylene block copolymer). Examples of commercially available products of antistatic agents include, but are not limited to, Electrostripper manufactured by Kao Corp. and so forth, and any product can be used provided it has a function that prevents the generation of static electricity.

The "lubricant" used in the present invention refers to a substance that has the function of improving the sliding properties of a product surface during and after plastic molding. Examples of lubricants include amide stearates, calcium stearate, etc., and at least one of these lubricants can be comprised in the pressure-sensitive adhesive of the present invention as necessary within a range that does not impair the object of the present invention, such as at 5 parts by weight or less (based on 100 parts by weight of the styrene-isobutylene block copolymer or 100 parts by weight of the thermoplastic elastomer composed of a styrene-isobutylene block copolymer and a styrene block copolymer or styrene random copolymer other than a styrene-isobutylene block copolymer).

In addition, at least one inorganic or organic filler can be comprised in the pressure-sensitive adhesive of the present invention as necessary within a range that does not impair the object of the present invention, such as at 5 parts by weight or less (based on 100 parts by weight of the styrene-isobutylene block copolymer or 100 parts by weight of the thermoplastic elastomer composed of a styrene-isobutylene block copolymer and a styrene block copolymer or styrene random copolymer other than a styrene-isobutylene block copolymer). Examples of inorganic fillers include talc, calcium carbonate, etc., while examples of organic fillers include polyethylene fine particles, etc.

Examples of release agents used for release agent treatment of a substrate sheet or film in the present invention include long chain alkyl release agents, silicon release agents, etc.

The ultraviolet transmission rate of the substrate used in the present invention was determined by measuring the transmission rate for light having a wavelength of 190 to 400 nm using a spectrophotometer (Jasco Corp., Model V-570). The light transmission rate of the substrate as measured at a wavelength range of 190 to 400 nm is a maximum of 1% or less, preferably 0.5% or less, and more preferably 0.3% or less.

Although the pressure-sensitive adhesive in the present invention can be coated using various known coating methods, extrusion coating (hot melt coating) method or spread coating method is preferable.

In the case of kneading the pressure-sensitive adhesive of the present invention, examples of kneading apparatuses that can be used include, but are not limited to, a single-screw extruder, twin-screw extruder, kneader, Banbury mixer, etc.

Examples of extrusion coating methods (hot melt coating methods) include, but are not limited to, a production method using co-extrusion with a single-layer or multilayer substrate resin, a production method using extrusion melt coating onto a substrate film (sheet) and so forth. For example, after pre-melting and kneading a pressure-sensitive adhesive composition of the present invention using a 30 mm diameter extruder equipped with a multilayer die such as a feed block die or multi-manifold die known among persons with ordinary skill in the art, a film can formed simultaneously by melt co-extruding with the aforementioned substrate resin to produce a surface protective sheet of the present invention. At this time, the set temperature of the extruder for the film (sheet) resin is 100 to 280°C, and preferably 150 to 230°C. The set temperature of the extruder for the pressure-sensitive adhesive is 100 to 250°C, preferably 150 to 230°C and more preferably 170 to 220°C. The set temperature of the die is 100 to 280°C and preferably 150 to 230°C. The pulling speed is 0.1 to 300 m/min and preferably 5 to 100 m/min.

In the case of extrusion melt coating onto a substrate film (sheet), a non-thermoplastic substrate such as paper, metal, woven cloth or non-woven cloth can be used for the substrate in addition to a film composed of a thermoplastic resin.

An example of a spread coating method includes, but is not limited to, dissolving the pressure-sensitive adhesive of the present invention in a solvent such as toluene or hexane at a concentration of 5 to 45%, and preferably 10 to 30%, coating using a coating method known among persons with ordinary skill in the art, and then drying to produce a surface protective sheet of the present invention.

Although the following provides a detailed explanation of the present invention through its examples, the present invention is not limited to these examples. In the examples, sheets and films can be used interchangeably.

### Example 1 (not according to the invention)

- Styrene-isobutylene block copolymer (SIBS): Kaneka corporation, SIBSTER 102T, MFR = 0.6 g/10 min (230°C, 2.16 kg) 100 parts
- Tackifying resin: Arakawa Chemical Industries Ltd, Rosin Ester Tackifying Resin, Pine Crystal KE100 15 parts
- Softening agent: Nippon Petrochemicals Company Limited, Nisseki Polybutene HV300 40 parts
- Antioxidant: Kawaguchi Chemical Industry Co., LTD, Phenol antoxidant, Antage W500 1 part
- Ultraviolet absorber: Ciba Specialty Chemicals, Benzotriazole ultraviolet Absorber, Tinuvin P 1 part

After pre-kneading the aforementioned pressure-sensitive adhesive composition, a film was formed by co-extruding with the following white polypropylene resin (light transmission rate: less than 0.5%) under the conditions indicated below followed by release agent treatment to obtain a pressure-sensitive adhesive sheet having a substrate thickness of 60 µm and pressure-sensitive adhesive thickness of 10 µm.

Furthermore, the ultraviolet transmission rate of the white polypropylene resin was determined by measuring the maximum value of the light transmission rate at a wavelength range of 190 to 400 nm in a 60 µm thick film using the Model V-570 spectrophotometer manufactured by Jasco Corp.

The white polypropylene resin was obtained by kneading polypropylene manufactured by Basell (Molplen 440G, MFR = 1.3 g/10 min (230°C, 2.16 kg), EMB2011P ethylene-butene rubber manufactured by JSR, and titanium oxide manufactured by Ishihara Sangyo Co., Ltd (Tipaque A220) at a weight ratio of 73:20:7 at 200°C using a twin-screw extruder followed by forming into pellets to use.

The substrate resin and kneaded pressure-sensitive adhesive composition (kneaded product) were co-extruded and formed into a film using a 30 mm diameter extruder equipped with a multi-manifold multilayer die to produce a pressure-sensitive adhesive sheet. Extrusion conditions: a set temperature for the film resin extruder of 200 to 230°C, a set temperature for the pressure-sensitive adhesive extruder of 170 to 220°C, a set temperature for the die of 230°C, a pulling speed of 10 m/min.

### Example 2 (not according to the invention)

- Styrene-isobutylene block copolymer (SIBS): Kaneka, SIBSTER 102T 100 parts
- Softening agent: Nippon Petrochemicals, Nisseki Polybutene HV300 40 parts
- Antioxidant: Kawaguchi Chemical Industry, Antage W500 1 part
- Ultraviolet absorber: Ciba Specialty Chemicals, Tinuvin P 1 part

A pressure-sensitive sheet having a substrate thickness of 60 µm and a pressure-sensitive adhesive thickness of 10 µm having the aforementioned pressure-sensitive adhesive composition was obtained in the same manner as Example 1.

### Example 3 (not according to the invention)

- Styrene-isobutylene block copolymer (SIBS): Kaneka, SIBSTER 102T 100 parts
- Tackifying resin: Arakawa Chemical Industries, Pine Crystal KE100 18 parts
- Softening agent: Nippon Petrochemicals, Nisseki Polybutene HV300 100 parts
- Antioxidant: Kawaguchi Chemical Industry, Antage W500 1 part
- Ultraviolet absorber: Ciba Specialty Chemicals, Tinuvin P 1 part

Corona treatment was performed on both sides of a sheet having a thickness of 60 µm composed of the following white polypropylene resin (light transmission rate: less than 0.5%) formed into a film by T-die extrusion method, a long chain alkyl release agent was coated onto one side thereof, and a pressure-sensitive adhesive liquid (solid content: 22%) having the aforementioned composition dissolved in toluene was coated onto the opposite side of the sheet (side not treated with release agent) to produce a pressure-sensitive adhesive sheet having a thickness of the pressure-sensitive adhesive of 10 µm.

Here, T-die extrusion method refers to a film formation method by which a film is formed by extruding a molten resin from a narrow space between heated dies, and allows the production of a pressure-sensitive sheet by extruding a pressure-sensitive adhesive onto a substrate. Moreover, a multilayer film can also be produced by simultaneously extruding two or three layers.

The white polypropylene resin was obtained by kneading polypropylene (Idemitsu Petrochemical, J-452HP, MFR = 3.5 g/10 min (230°C, 2.16 kg)), EMB2011P ethylene-butene rubber manufactured by JSR, and titanium oxide (Ishihara Sangyo, Tipaque A220) at a weight ratio of 73:20:7 at 200°C using a twin-screw extruder followed by forming into pellets to use.

In addition, after pre-kneading the aforementioned pressure-sensitive adhesive composition, a film was formed by co-extruding with the white polypropylene resin under the conditions shown in Example 1 followed by evaluation of extrusion suitability. There were no particular problems observed.

### Example 4

- Styrene-isobutylene block copolymer (SIBS): Kaneka, SIBSTER 102T 50 parts
- Styrene random copolymer (HSBR): JSR, Dynalon 1320P 50 parts
- Tackifying resin: Arakawa Chemical Industries, Pine Crystal KE100 15 parts
- Softening agent: Nippon Petrochemicals, Nisseki Polybutene HV300 40 parts
- Antioxidant: Kawaguchi Chemical Industry, Antage W500 1 part
- Ultraviolet absorber: Ciba Specialty Chemicals, Tinuvin P 1 part

A pressure-sensitive sheet having a substrate thickness of 60 µm and a pressure-sensitive adhesive thickness of 10 µm having the aforementioned pressure-sensitive adhesive composition was obtained in the same manner as Example 1.

### Example 5 (not according to the invention)

A pressure-sensitive adhesive sheet was produced by the spread coating method described in Example 3 after changing the number of parts by weight of the tackifying resin described in Example 3 from 18 parts by weight to 0 parts by weight, and changing the number of parts by weight of the softening agent from 100 parts by weight to 270 parts by weight.

### Example 6 (not according to the invention)

A pressure-sensitive adhesive sheet was produced by the spread coating method described in Example 3 after changing the number of parts by weight of the softening agent described in Example 3 from 100 parts by weight to 270 parts by weight.

### Comparative Example 1

A pressure-sensitive adhesive sheet was produced according to the same method as Example 1 with the exception of changing the SIBS in the pressure-sensitive adhesive composition of Example 1 to SEPS (styrene block copolymer, Kuraray, Septon 2063, MFR = 7 g/10 min (230°C, 2.16 kg).

### Comparative Example 2

A pressure-sensitive adhesive sheet was produced according to the same method as Example 1 with the exception of changing the amount of the tackifying resin in the pressure-sensitive adhesive composition of Example 1 to 35 parts by weight.

The white polypropylene resin was obtained by kneading polypropylene manufactured by Idemitsu Petrochemical (J-452HP, MFR = 3.5 g/10 min (230°C, 2.16 kg)), EMB2011P ethylene-butene rubber manufactured by JSR, and titanium oxide (Ishihara Sangyo, Tipaque A220) at a weight ratio of 73:20:7 at 200°C using a twin-screw extruder followed by forming into pellets to use.

### Comparative Example 3

- Styrene-isobutylene block copolymer (SIBS): Kaneka, SIBSTER 102T 100 parts
- Tackifying resin: Arakawa Chemical Industries, Pine Crystal KE100 30 parts
- Softening agent: Nippon Petrochemicals, Nisseki Polybutene HV300 230 parts
- Antioxidant: Kawaguchi Chemical Industry, Antage W500 1 part
- Ultraviolet absorber: Ciba Specialty Chemicals, Tinuvin P 1 part

After pre-kneading the aforementioned pressure-sensitive adhesive composition, although a film was formed by co-extruding with the following white polypropylene resin, the pressure-sensitive adhesive was unevenly distributed in the ends of the film and a uniform pressure-sensitive adhesive sheet was unable to be obtained.

### Comparative Example 4

- Polyisobutylene: ExxonMobil Chemical, Vixtanex MML80 100 parts
- Tackifying resin: Arakawa Chemical Industries, Pine Crystal KE100 15 parts
- Softening agent: Nippon Petrochemicals, Nisseki Polybutene HV300 40 parts
- Antioxidant: Kawaguchi Chemical Industry, Antage W500 1 part
- Ultraviolet absorber: Ciba Specialty Chemicals, Tinuvin P 1 part

After pre-kneading the aforementioned pressure-sensitive adhesive composition, although a film was formed by co-extruding with a white polypropylene resin having an MFR of 1.6 g/10 min (230°C, 2.16 kg) in the same manner as Example 1, a uniform pressure-sensitive adhesive sheet was unable to be obtained because a wood grain pattern was formed on the substrate side of the pressure-sensitive adhesive sheet or there were surface irregularities on the pressure-sensitive adhesive side.

### Comparative Example 5

- Styrene-isobutylene block copolymer (SIBS): Kaneka, SIBSTER 102T 100 parts
- Tackifying resin: Arakawa Chemical Industries, Pine Crystal KE100 25 parts
- Softening agent: Nippon Petrochemicals, Nisseki Polybutene HV300 100 parts
- Antioxidant: Kawaguchi Chemical Industry, Antage W500 1 part
- Ultraviolet absorber: Ciba Specialty Chemicals, Tinuvin P 1 part

After pre-kneading the aforementioned pressure-sensitive adhesive composition, a film was formed by co-extruding with the following white polypropylene resin and then treated with release agents to produce a pressure-sensitive adhesive sheet having a substrate thickness of 60 µm and a pressure-sensitive adhesive thickness of 10 µm.

The white polypropylene resin was obtained by kneading polypropylene manufactured by Idemitsu Petrochemical (J-452HP, MFR = 3.5 g/10 min (230°C, 2.16 kg)), EMB2011P ethylene-butene rubber manufactured by JSR, and titanium oxide (Ishihara Sangyo, Tipaque A220) at a weight ratio of 73:20:7 at 200°C using a twin-screw extruder followed by forming into pellets to use.

### Comparative Example 6

- Styrene random copolymer (HSBR): JSR, Dynalon 1320P, MFR = 0.6 g/10 min (230°C, 2.16 kg) 100 parts
- Softening agent: Nippon Petrochemicals, Nisseki Polybutene HV300 40 parts
- Antioxidant: Kawaguchi Chemical Industry, Antage W500 1 part
- Ultraviolet absorber: Ciba Specialty Chemicals, Tinuvin P 1 part

A pressure-sensitive sheet having a substrate thickness of 60 µm and a pressure-sensitive adhesive thickness of 10 µm having the aforementioned pressure-sensitive adhesive composition was obtained in the same manner as Example 1.

### Comparative Example 7

A pressure-sensitive adhesive sheet was produced using the spread coating method described in Example 3 after substituting the SIBS used in Example 3 with SIS (styrene-isoprene-styrene block copolymer, Zeon Corp., Quintac 3421C).

### Comparative Example 8

A pressure-sensitive adhesive sheet was produced using the spread coating method described in Example 3 after substituting the SIBS used in Example 3 with polyisobutylene (PIB, ExxonMobil Chemical, Vixtanex MML80).

### Comparative Example 9

A pressure-sensitive adhesive sheet was produced according to the same method as Example 5 with the exception of changing the number of parts by weight of the softening agent in Example 5 from 270 parts by weight to 400 parts by weight.

Measurement of MFR of the pressure-sensitive adhesive compositions and evaluation of the adhesion properties and practicality of the resulting pressure-sensitive adhesive sheets were carried out using the methods described below.

### <Measurement of Melt Flow Rate>

Melt flow rate was measured using the Melt Index Tester KAYENESS 7053 manufactured by Yasuda Seiki Seisakusho LTD according to a method in compliance with JIS K 7210 under the conditions of a measured temperature of 190°C and load of 2.16 kg.

### <Extrusion Suitability>

Extrusion suitability was evaluated by checking for the presence of visual abnormalities such as roughening of the surface of extruded products (shark skin pattern, wood grain pattern, etc.) or melt fracture, or the presence of prominent layer thickness unevenness.

### <Evaluation of Adhesion Properties>

Adhesive strength for coated film: 180° Peel force, Adherend: poorly adhesive acrylic coated film*, Peel rate: 0.3 m/min (in compliance with JIS Z 0237), Measured atmosphere: 23°C, -20°C

High-speed peel strength for coated film: 180° Peel force, Adherend: poorly adhesive acrylic coated film*, peel rate: 40 m/min, Heat treatment: 70°C x 5 hours followed by allowing to cool on standing to room temperature, Measured atmosphere: 23°C (in compliance with JIS Z 0237)
* A clear, poorly adhesive acrylic coated film for automotive use having wettability (in compliance with JIS K 6768) of less than 30 dyn/cm manufactured by PPG Industries was used for the poorly adhesive acrylic coated film.

Measurement of holding power: A pressure-sensitive sheet with 20 mm wide by 50 mm long was affixed to one end of a glass plate with the adhesive area of 20 x 20 mm² followed by pressing together by rolling back and forth once using a 1 kg roller. After allowing to stand for 30 minutes, the glass plate (adhered side) was positioned vertically, a 1 kg copper weight was suspended from the free portion of the pressure-sensitive adhesive sheet, and after allowing to stand for 1 hour at a predetermined ambient temperature (23°C), the shift in the position of the pressure-sensitive pressure-sensitive adhesive sheet was read in 0.1 mm units. Furthermore, in the case the pressure-sensitive adhesive sheet stretched, the back of the pressure-sensitive adhesive sheet was lined with pressure-sensitive adhesive tape and so forth to measure.

### <Evaluation of Practicality>

Ease of peeling work: A pressure-sensitive adhesive sheet coated with a pressure-sensitive adhesive was affixed to a coated plate coated with a poorly adhesive acrylic coating*, was subjected to heat treatment for 5 hours at 75°C followed by allowing to cool on standing to room temperature to evaluate the ease of manual peeling work.

5% Stretching Adhesion Test: A pressure-sensitive sheet coated with a pressure-sensitive adhesive was pulled so as to be stretched by 5% followed by affixing to a coated plated coated with a poorly adhesive acrylic coating and heating for 12 hours at 40°C to evaluate the presence of problems with the pressure-sensitive adhesive sheet (such as shrinkage of the pressure-sensitive adhesive sheet or residual pressure-sensitive adhesive). The pressure-sensitive adhesive sheet has 15 mm in width and 80 mm in length.

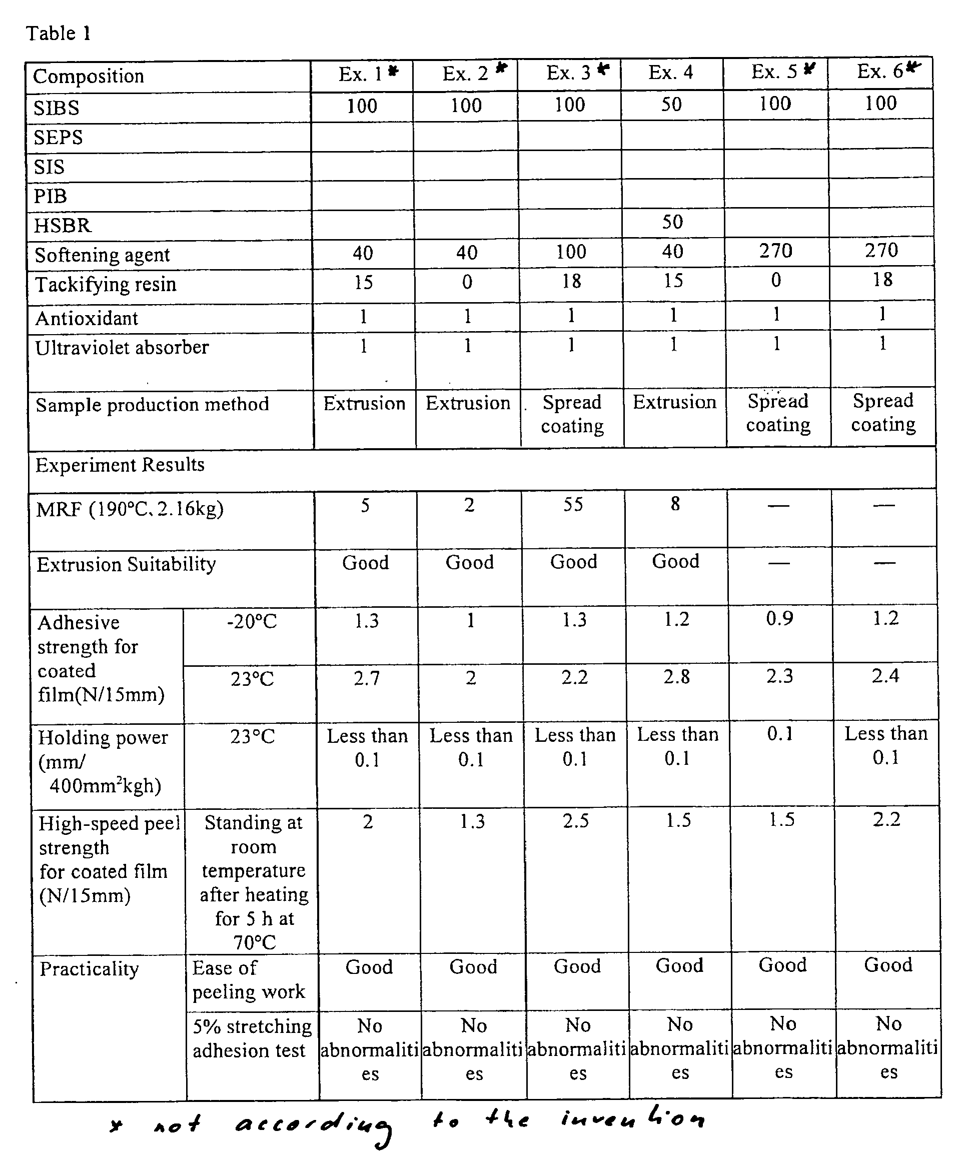

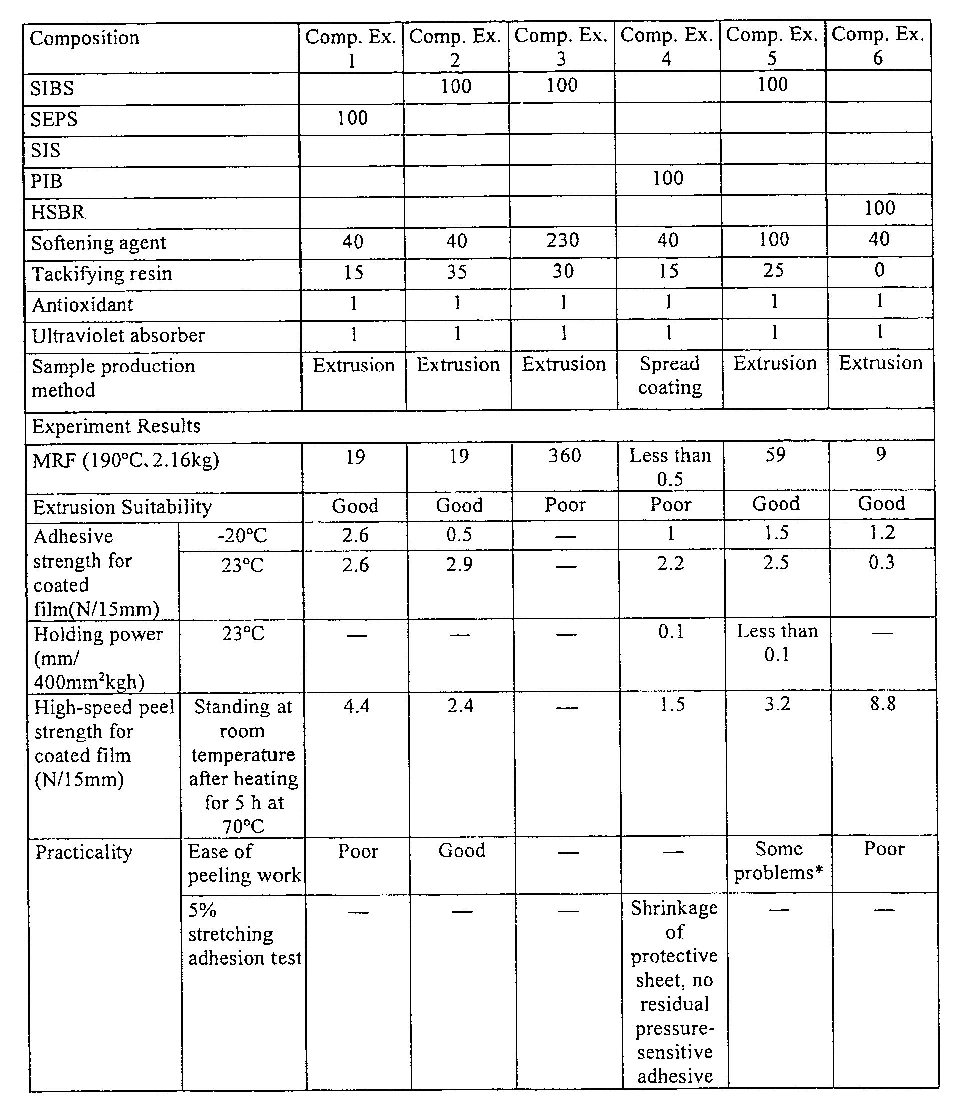

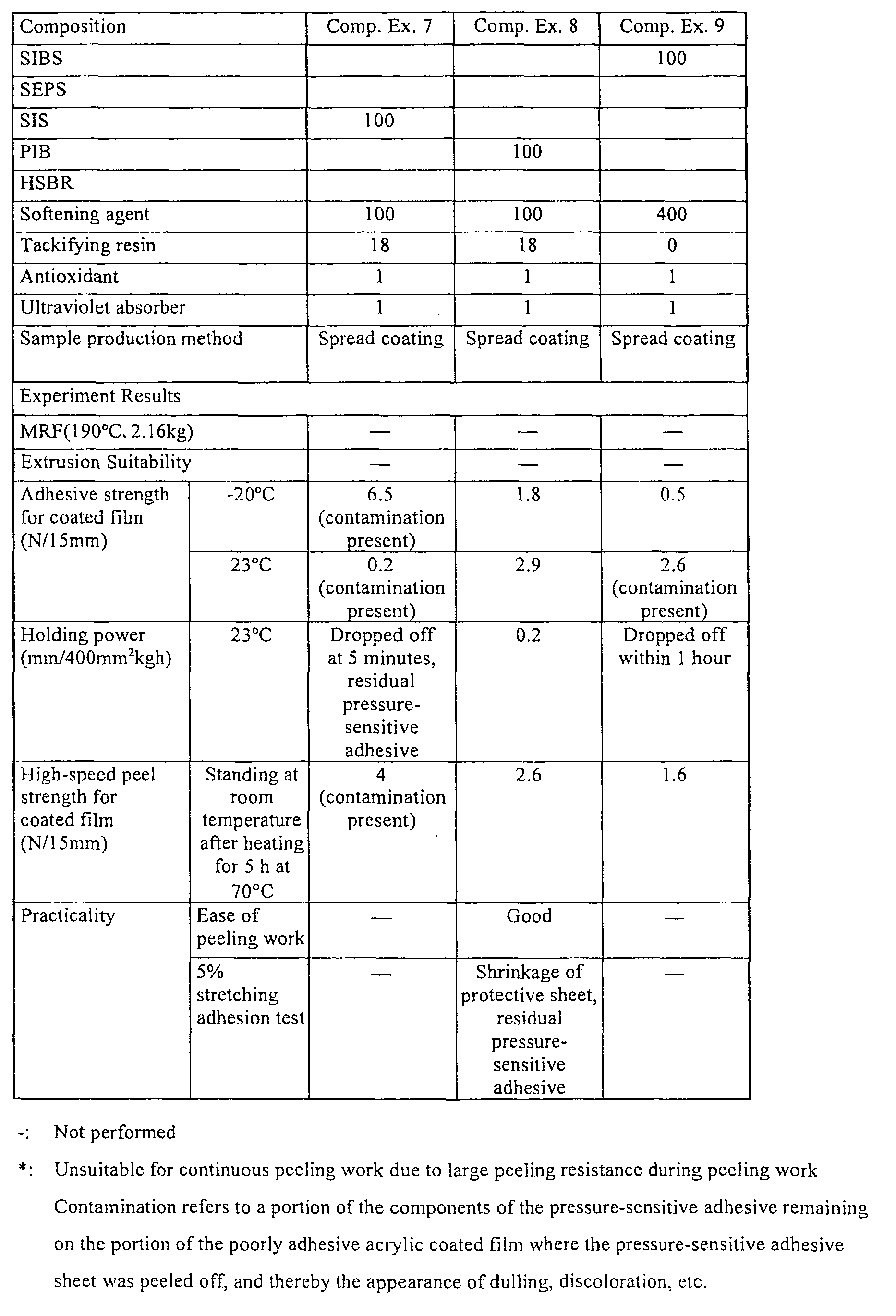

### <Results>

The measurement results are shown in Table 1.

The pressure-sensitive adhesive sheets of Examples 1, 2 and 4 all had good extrusion suitability and suitable adhesive strength, had little increase in high-speed peel strength for a coated film after heating, and demonstrated a good balance of adhesion properties as surface protective sheets with good peel properties. The pressure-sensitive adhesive sheet of Example 3 was produced by coating the pressure-sensitive adhesive by spread coating, and demonstrated a good balance of adhesion properties as a surface protective sheet. There was little increase in high-speed peel strength for a coated film after heating, and practicality was also good. In addition, the pressure-sensitive adhesive had good extrusion suitability.

On the other hand, the pressure-sensitive adhesive sheet that used SEPS (styrene block copolymer) in Comparative Example 1 demonstrated a large increase in high-speed peel strength for a coated film after heating as well as inferior ease of peeling work, and thereby was unsuitable as a surface protective sheet. In addition, although the pressure-sensitive adhesive sheet of Comparative Example 2 in which the amount of tackifying agent used in Example 1 was changed to 35 parts by weight did not exhibit an increase in high-speed peel strength for a coated film after heating, it had low adhesive strength at low temperatures. In Comparative Example 3, MFR was too high and extrusion suitability was inadequate. In Comparative Example 4, extrusion suitability was inadequate due to MFR being too low. In addition, shrinkage was observed in the 5% stretching adhesion test for the pressure-sensitive adhesive sheet produced by spread coating (spread coated product), and thus there was room for improvement as a surface protective sheet. On the other hand, the pressure-sensitive adhesive sheet of Comparative Example 5, in which the amount of tackifying resin used in Example 3 was changed to 25 parts by weight, high-speed peel strength for a coated film after heating was high, ease of peeling work decreased and it thereby was unsuitable as a surface protective sheet. Although the styrene random copolymer-based pressure-sensitive adhesive sheet of Comparative Example 6 had poor ease of peeling work, the pressure-sensitive adhesive sheet of Example 4 composed of a thermoplastic elastomer that blend SIBS into a styrene random copolymer had good ease of peeling work. The pressure-sensitive sheet of Comparative Example 7 that used SIS (styrene-isoprene-styrene block copolymer) as diene block polymer was observed to have residual pressure-sensitive adhesive on the coated film after peeling in the evaluation of ease of peeling work. On the other hand, there were no problems such as residual pressure-sensitive adhesive in the pressure-sensitive adhesive sheet of Example 3 that used SIBS. Although the pressure-sensitive adhesive sheet of Comparative Example 8 that used PIB (polyisobutylene) did not have any problems with ease of peeling work, in the case of affixing with applying tension of about 5% to affix finely without wrinkles and heating for 12 hours at 40°C based on the assumed temperature of a coated film during the summer, the pressure-sensitive adhesive sheet was observed to shrink and residual pressure-sensitive adhesive was observed on the coated film. On the other hand, the pressure-sensitive adhesive sheet of Example 3 was not observed to demonstrate any problems such as shrinkage of the substrate or residual pressure-sensitive adhesive even under the same conditions. The pressure-sensitive adhesive sheet of Comparative Example 9, in which the amount of softening agent was set at 400 parts by weight, dulling was observed on the coated film and dropping was observed in the holding power test. However, such problems were not observed in the pressure-sensitive adhesive sheets of Examples 5 and 6, in which the amount of softening agent was 270 parts by weight (amount of tackifying resin in Example 5: 0 parts by weight, amount of tackifying resin in Example 6: 18 parts by weight), and they demonstrated good adhesion properties as surface protective sheets.

### INDUSTRIAL APPLICABILITY

The present invention can be used for the purpose of protecting a metal surface, glass surface, plastic surface, rubber surface or coated surface and so forth. In particular, it can be used to protect the topcoat coated surface of an automobile body on which painting was completed from scratches, dulling, discoloration and so forth during transport or outdoor storage.

## Claims

1. A surface protective sheet having a pressure-sensitive adhesive layer on at least one side of a substrate, **characterized in that** the pressure-sensitive adhesive comprises 100 parts by weight of a thermoplastic elastomer composed of a styrene-isobutylene block copolymer and a styrene block copolymer or a styrene random copolymer other than the styrene-isobutylene block copolymer, and 0 to 300 parts by weight of a softening agent and 0 to less than 20 parts by weight of a tackifying resin, based on 100 parts by weight the thermoplastic elastomer.

2. A surface protective sheet according to claim 1, **characterized in that** the styrene-isobutylene block copolymer and the styrene copolymer other than the styrene-isobutylene block copolymer are comprised at a weight ratio of 70:30 to 50:50.

3. A surface protective sheet according to any of claims 1 to 2, **characterized in that** the melt flow rate of the pressure-sensitive adhesive is 0.5 to 300 g/10 min at 190°C and 2.16 kg.

4. A surface protective sheet according to any of claims 1 to 3, **characterized in that** the tackifying resin is composed of a hydrogenated rosin ester resin.

5. A surface protective sheet according to any of claims 1 to 4 wherein the softening agent is at least one selected from the group consisting of oil, paraffin wax, low molecular weight polybutene, low molecular weight polyisoprene, low molecular weight polyisobutylene and low molecular weight poly-α-olefin.

6. A surface protective sheet according to any of claims 1 to 5, **characterized in that** at least one selected from the group consisting of an antioxidant, ultraviolet absorber, ultraviolet stabilizer (HALS), antistatic agent and lubricant is comprised in the pressure-sensitive adhesive.

7. A surface protective sheet according to any of claims 1 to 6 wherein the ultraviolet transmission rate of the substrate is 1% or less.

## Patentansprüche

1. Oberflächenschutzfolie, die eine druckempfindliche Haftschicht auf wenigstens einer Seite eines Substrats hat, **dadurch gekennzeichnet, dass** das druckempfindliche Haftmittel 100 Gewichtsteile eines thermoplastischen Elastomers, zusammengesetzt aus einem Styrol-Isobutylen-Block-Copolymer und einem Styrol-Block-Copolymer oder einem Styrol-Zufalls-Copolymer, das von dem Styrol-Isobutylen-Block-Copolymer verschieden ist, und 0 bis 300 Gewichtsteile eines Weichmachers und 0 bis weniger als 20 Gewichtsteile eines klebrigmachenden Harzes umfaßt, basierend auf 100 Gewichtsteilen des thermoplastischen Elastomers.

2. Oberflächenschutzfolie nach Anspruch 1, **dadurch gekennzeichnet, dass** das Styrol-Isobutylen-Block-Copolymer und das Styrol-Copolymer, das von dem Styrol-Isobutylen-Block-Copolymer verschieden ist, in einem Gewichtsverhältnis von 70:30 bis 50:50 enthalten sind.

3. Oberflächenschutzfolie nach Anspruch 1 oder 2, **dadurch gekennzeichnet, dass** die Schmelzflußrate des druckempfindlichen Haftmittels 0,5 bis 300 g/10 min bei 190 °C und 2,16 kg ist.

4. Oberflächenschutzfolie nach einem der Ansprüche 1 bis 3, **dadurch gekennzeichnet, dass** das klebrigmachende Harz aus einem hydrierten Kolophonium-Ester-Harz zusammengesetzt ist.

5. Oberflächenschutzfolie nach einem der Ansprüche 1 bis 4, wobei der Weichmacher wenigstens einer ist ausgewählt aus der Gruppe bestehend aus Öl, Paraffinwachs, niedermolekulargewichtigem Polybuten, niedermolekulargewichtigem Polyisopren, niedermolekulargewichtigem Polyisobutylen und niedermolekulargewichtigem Poly-α-Olefin.

6. Oberflächenschutzfolie nach einem der Ansprüche 1 bis 5, **dadurch gekennzeichnet, dass** wenigstens einer ausgewählt aus der Gruppe bestehend aus einem Antioxidant, Ultraviolettabsorber, Ultraviolettstabilisierer (HALS), Antistatikum und Schmiermittel in dem druckempfindlichen Haftmittel enthalten ist.

7. Oberflächenschutzfolie nach einem der Ansprüche 1 bis 6, wobei die Ultraviolett-Transmissionsrate des Substrats 1% oder weniger ist.

## Revendications

1. Feuille de protection d'une surface ayant une couche adhésive sensible à la pression sur au moins un côté d'un substrat, **caractérisée en ce que** l'adhésif sensible à la pression comprend 100 partie en poids d'un élastomère thermoplastique composé d'un copolymère bloc de styrène isobutylène et de copolymère bloc de styrène ou de copolymère aléatoire de styrène autre que le copolymère bloc de styrène isobutylène, et entre 0 et 300 parties en poids d'un agent assouplissant et entre 0 et moins de 20 parties en poids d'une résine collante, sur la base de 100 parties en poids de l'élastomère thermoplastique.

2. Feuille de protection d'une surface selon la revendication 1, **caractérisée en ce que** le copolymère bloc de styrène isobutylène et le copolymère de styrène autre que le copolymère bloc de styrène isobutylène sont dans un rapport en poids compris entre 70:30 et 50:50.

3. Feuille de protection d'une surface selon l'une quelconque des revendications 1 à 2, **caractérisée en ce que** l'indice de fluidité de l'adhésif sensible à la pression est compris entre 0,5 et 300 g/10 min à 190°C et 2,16 kg.

4. Feuille de protection d'une surface selon l'une quelconque des revendications 1 à 3, **caractérisée en ce que** la résine collante est composée d'une résine d'ester de colophane hydrogénée.

5. Feuille de protection d'une surface selon l'une quelconque des revendications 1 à 4, **caractérisée en ce que** l'agent assouplissant est au moins l'un sélectionné dans le groupe consistant en de l'huile, de la paraffine, du polybutène à faible poids moléculaire, du polyisoprène à faible poids moléculaire, du polyisobutylène à faible poids moléculaire et une poly-α-oléfine à faible poids moléculaire.

6. Feuille de protection d'une surface selon l'une quelconque des revendications 1 à 5, **caractérisée en ce qu'**au moins l'un sélectionné parmi le groupe consistant en un antioxydant, un absorbeur ultraviolet, un stabilisant ultraviolet (HALS en anglais), un agent antistatique, et un lubrifiant est compris dans l'adhésif sensible à la pression.

7. Feuille de protection d'une surface selon l'une quelconque des revendications 1 à 6, dans lequel le taux de transmission ultraviolet du substrat est de 1% ou moins.
